# EUROPEAN PATENT APPLICATION

(11) **EP 4 417 506 A1**
(43) Date of publication of application: **21.08.2024**
(21) Application number: 24157986.1
(22) Date of filing: 16.02.2024
(51) Int. Cl.: B64C 1/14, E05B 15/04

(54) **SELF-CLOSING AND RESETTING LATCH**

(30) Priority: 16.02.2023 US 202318170400
(71) Applicant: The Boeing Company, Arlington, VA 22202 (US)
(72) Inventor: BOAS, Jonathan P., Arlington, 22202 (US)
(74) Representative: Morrall, Jonathan Ian McLachlan

(57) **Abstract**

A self-closing and resetting latch is disclosed herein. An example apparatus includes a pawl (204, 610) having a protrusion (226), the pawl coupled to an over-center spring (310, 622), the over-center spring connected to a frame of a cabin door (115, 412), and a latch hook (206, 612) having a first recess (228) to receive the protrusion of the pawl and a second recess (229) to receive a latch pin (230, 616) when the cabin door closes.

## Description

### FIELD OF THE DISCLOSURE

This patent relates generally to a latching system and, more particularly, to a self-closing and resetting latch for use in aircraft.

### BACKGROUND

Aircraft include cabin doors that are held in place by mechanical and/or electrical latches. The cabin door is effectively sealed while in flight by a pressure difference between the cabin and the air outside the cabin door. In some examples, cabin doors include a tapered shape that facilitates sealing of the door once pressure is applied.

### SUMMARY

An example apparatus includes a pawl having a protrusion, the pawl coupled to an over-center spring, the over-center spring connected to a frame of a cabin door, and a latch hook having a first recess to receive the protrusion of the pawl and a second recess to receive a latch pin when the cabin door closes.

An example apparatus includes a pawl movably coupled to a reset link, the reset link to rotate about a joint of a primary latch actuation handle, the primary latch actuation handle to cause latching of a door, and a latch hook positioned to receive the pawl, the door stabilized against further movement when the pawl engages the latch hook.

An example apparatus includes means for engaging a latch pin, the means for engaging the latch pin having means for receiving the latch pin, and means for locking the means for engaging the latch pin, the means for locking having means for connecting to a means for resetting, the means for resetting pivotally coupled to a means for actuating a primary latch.

### BRIEF DESCRIPTION OF THE DRAWINGS

FIG. 1 illustrates an example air vehicle in which examples disclosed herein can be implemented.
FIG. 2 illustrates a first example of a self-closing and resetting latch in accordance with teachings of this disclosure.
FIG. 3A illustrates the example self-closing and resetting latch assembly of FIG. 2 positioned within an example aircraft door frame when the door is unlatched.
FIG. 3B illustrates the example self-closing and resetting latch assembly of FIG. 2 positioned within an example aircraft door frame when the door is latched.
FIG. 3C illustrates the example self-closing and resetting latch assembly of FIG. 2 positioned within an example aircraft door frame when the door is closed and unlatched.
FIG. 3D illustrates the example self-closing and resetting latch assembly of FIG. 2 positioned within an example aircraft door frame when the door is open.
FIGS. 4A-4D illustrate example movements of a latch hook and pawl of the self-closing and resetting latch assembly of FIG. 2 based on movement of a handle connected to the latch when the locking pin is in an example open position and/or in an example closed position.
FIG. 5 illustrates an example sequence of movements of the latch hook and pawl of the self-closing and resetting latch assembly of FIG. 2.
FIGS. 6A-6B illustrate example side views of a second example of a self-closing and resetting latch assembled in accordance with teachings of this disclosure.
FIGS. 7A-7L illustrate example side views of a self-closing and resetting latch during an example sequence of movements associated with movement of an actuation handle.

In general, the same reference numbers will be used throughout the drawing(s) and accompanying written description to refer to the same or like parts. The figures are not to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name.

### DETAILED DESCRIPTION

Various types of aircraft (e.g., passenger aircraft, freight aircraft, military aircraft, etc.) include one or more door(s). For example, an aircraft can include a multitude of fuselage doors, such as a passenger door, a galley service door, an emergency exit door, a cargo door, and/or an avionics compartment door. Some doors, such as the passenger door and/or the galley service door, can be operated from inside the aircraft. A typical sequence of steps for opening a passenger door from the inside can include (1) lifting a handle out of a cam recess (e.g., allowing an outer handle to eject from its recess, unlocking the latch mechanism, and opening a pressurization flap on the passenger door's exterior surface), (2) moving the handle towards an open position (e.g., disengaging latch cams and latch pins from door frame fittings, engaging pull-out levers), and (3) pushing the door outward. Conversely, closing and latching the passenger door from the inside can include engaging pull-in/push-out levers in respective cams to hold the door in position, engaging latch cams and latch pins in the door frame fittings while pushing the inner handle downwards, and latching the stow handle.

While the aircraft doors can be held in place by mechanical and/or electrical latches, the cabin door is effectively sealed while in flight by a pressure difference between the cabin and the air outside the cabin door. In some examples, the cabin door includes a tapered shape that facilitates sealing of the door once pressure is applied. Existing mechanisms used for aircraft door latching may not include a self-latching door, necessitating a flight attendant to manually close the door. As such, nothing holds the door in a closed position until the handle is actuated by the flight attendant, which drives the latching mechanism to secure the door.

Disclosed herein are example self-closing and resetting latches for use in a self-latching aircraft door. Examples disclosed herein include a self-closing and resetting latch that includes a latch hook, a pawl, and a reset link in connection with a primary latch actuation handle. Examples disclosed herein include a sufficient range of motion of the latch hook to allow for unloading when locking pins are engaged (e.g., fully closed). Examples disclosed herein allow for over-travel of the aircraft door when using the self-closing and resetting latch disclosed herein. Furthermore, the self-closing and resetting latch includes a throat depth of the latch hook that allows for greater rotation and introduces the potential to integrate bumpers and/or strikers into a hold-closed mechanism.

In examples disclosed herein, the sequence of the self-closing and resetting latch movement includes (1) disengaging latches when the door is fully open (e.g., an over-center spring forces the pawl into an open-most position), (2) engaging a hold-closed latch (e.g., the over-center spring forces the pawl to engage the latch hook, preventing the door from re-opening), (3) engaging the primary latch while the hold-closed latch disengages (e.g., the reset link moves the pawl into an unlocked position), and (4) fully disengaging the hold-closed latch as the primary latches are engaged, thereby requiring no additional user tasks. As such, additional action from an operator (e.g., the flight attendant) is not necessary to close the door once the door has been closed by operating the handle that engages the primary latch mechanism (e.g., no additional steps to undo or relatch a second mechanism are needed). As such, in examples disclosed herein, a latch capable of latching and resetting without independent actuation can be used for securing aircraft doors. For example, known latches require independent actuation or do not positively retain the door (e.g., a rocker-style gate latch requires independent actuation to reset the latch when opening the door, a draw latch requires independent actuation to latch and reset the door, a roller arm latch does not positively retain the door, and a hook latch requires independent actuation to latch and reset the door and also does not de-couple loads when the primary latch is engaged).

The self-closing and resetting latch described herein includes a configuration of the pawl, reset link, and main hook that allows the latch to self-engage as the door is closed and to reset as the door is opened. As such, the disclosed self-closing and resetting latch can be used in any application where a door latch is required and where it is beneficial to incorporate a hold-closed mechanism on the door. The incorporation of a secondary door hold-closed latch allows the door to be constrained in the closed position without the need to be held manually while a primary latching mechanism is engaged. Because the latch described herein is driven by the primary latching mechanism, no additional steps need to be performed by the operator when opening or closing the door. Positively constraining the door in a closed position prior to engagement of the primary latching mechanism reduces operator error and improves reliability and maintainability of the primary latching mechanism. While examples disclosed herein are described in connection with an aircraft, the self-closing and resetting latch can be used in any other setting and/or vehicle not limited to an aircraft. Thus, the discussion of examples disclosed herein in connection with self-closing and resetting latches is for illustrative purposes only and does not limit the examples to use only with aircraft.

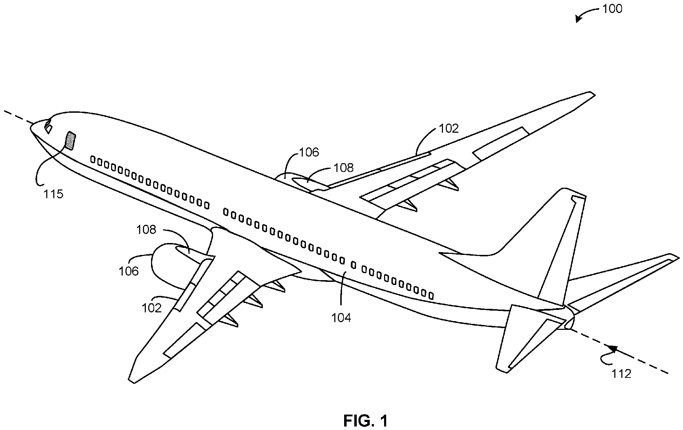

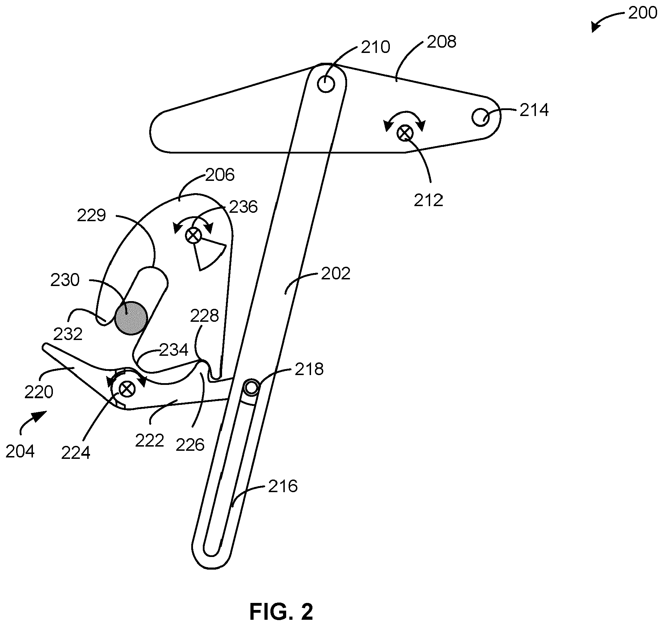

Turning to the figures, FIG. 1 illustrates an example aircraft 100 in which the examples disclosed herein can be implemented. While in the example of FIG. 1 the aircraft 100 is a passenger plane or a cargo plane, the aircraft 100 may be any other type of air vehicle (e.g., a helicopter). In the illustrated example, the aircraft 100 includes a fuselage 104 and wings 102 (e.g., a right wing and a left wing) extending laterally outward from the fuselage 104. Each of the wings 102 of the illustrated example supports an aircraft engine 106 via a pylon 108. A longitudinal axis 112 of the aircraft 100 is labeled in FIG. 1. An example cabin door 115 is held in position by mechanical and/or electrical latches. In some examples, the cabin door 115 is held in position using a self-closing and resetting latch disclosed in more detail in connection with FIG. 2. In some examples, the cabin door 115 includes a tapered shape that facilitates sealing of the door.

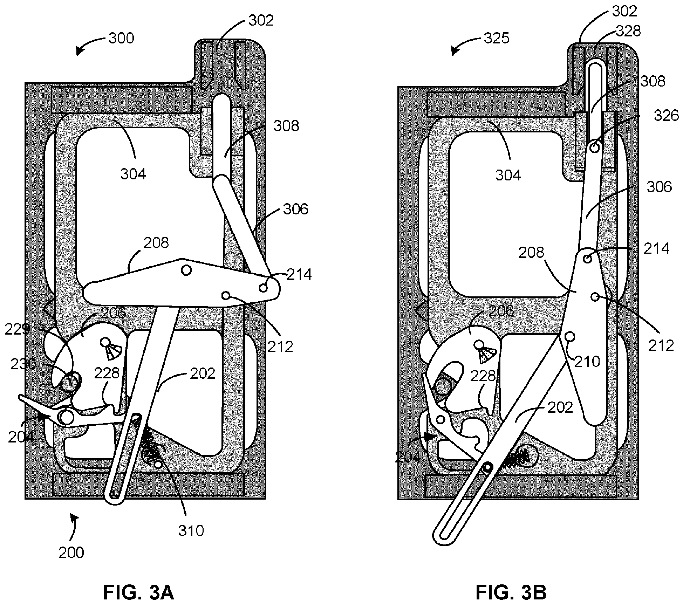

FIG. 2 illustrates a first example of a self-closing and resetting latch assembly 200 assembled in accordance with teachings of this disclosure. In the example of FIG. 2, the self-closing and resetting latch assembly 200 includes an example reset link 202, an example pawl 204, and an example latch hook 206. The reset link 202 is movably coupled to an example primary latch actuation handle 208. For example, the reset link 202 is coupled to the latch actuation handle 208 at a first joint 210 of the latch assembly 200. During movement of the reset link 202, the reset link 202 pivots about the first joint 210 of the latch assembly 200. In the example of FIG. 2, the primary latch actuation handle 208 includes an example second joint 212 and/or an example third joint 214 used to couple the self-closing and resetting latch assembly 200 to a frame of the cabin door 115 of FIG. 1, as described in more detail in connection with FIGS. 3A-3D. The reset link 202 includes a slot 216 to permit movement of an example post 218 of the pawl 204 when the reset link 202 is driven by a primary latch mechanism (e.g., via the primary latch actuation handle 208). For example, the pawl 204 interfaces with the reset link 202 driven by the primary latch mechanism so that the pawl 204 disengages when the primary latch mechanism (not shown) is engaged.

In the example of FIG. 2, the pawl 204 includes an example first portion 220 and an example second portion 222, the first portion 220 and the second portion 222 are movably coupled via an example fourth joint 224. The latch hook 206 engages with an example protrusion 226 of the pawl 204 as the door is closed to prevent the door from inadvertently opening. For example, the latch hook 206 includes a first recess 228 to engage the protrusion 226 of the pawl 204. The latch hook 206 also includes an example second recess 229 to allow for an example latch pin 230 to translate within the second recess 229 during opening and/or closing of the cabin door 115. In some examples, the size (e.g., length or depth) of the second recess 229 can be modified to allow for greater rotation of the latch hook 206 (e.g., allow for over travel of the door 115). In the example of FIG. 2, the second recess 229 includes an example first edge surface 232 and an example second edge surface 234 to receive the latch pin 230. In some examples, the depth of the second recess 229 determines the amount of latch hook 206 rotation. The latch hook 206 includes a fifth joint 236 about which the latch hook 206 moves clockwise and/or counterclockwise to ensure a sufficient range of motion of the latch hook 206 and/or allow the latch hook 206 to be unloaded when locking pins are engaged (e.g., fully closed). The configuration of the reset link 202, the pawl 204, and/or the latch hook 206 allows the latch mechanism shown in connection with the self-closing and resetting latch assembly 200 to self-engage as the door is closed and to reset as the door is opened, such that the latch assembly 200 is decoupled from primary door loads when the door is fully closed and self-resets to an open position when the door is opened, as described in more detail in connection with FIGS. 3A-3D, 4A-4D, and 5.

FIG. 3A illustrates the example self-closing and resetting latch assembly 200 of FIG. 2 positioned within an example aircraft door frame 302 of the cabin door 115 of FIG. 1. As shown in connection with a first assembly position 300, the door frame 302 includes a subframe 304 positioned within the door frame 302. The subframe 304 secures the self-closing and resetting latch assembly 200 when the assembly is static and/or during assembly movement (e.g., opening and/or closing of the cabin door 115). In the example of FIG. 3A, the self-closing and resetting latch assembly 200 is movably coupled to an example first linkage 306 and an example second linkage 308. For example, the primary latch actuation handle 208 is movably coupled to the first linkage 306 via the third joint 214. Likewise, the primary latch actuation handle 208 is movably coupled to the subframe 304 via the second joint 212. Furthermore, the first linkage 306 is movably coupled to the second linkage 308 via an example sixth joint 326, as shown in the example second assembly view 325. The latch pin 230 is shown as part of the door frame 302, such that the latch pin 230 is received by the latch hook 206 during closing of the cabin door 115 when the pawl 204 engages the latch hook 206 based on the movement of the reset link 202.

The first assembly position 300 illustrates the cabin door 115 in a closed position with the cabin door handle (not shown) unlatched (e.g., the latch pin 230 positioned within the second recess 229). In the first assembly position 300, an example spring 310 pushes the pawl 204 to rotate into the first recess 228 (e.g., the protrusion 226 of the pawl 204 enters the first recess 228 of the latch hook 206). Once the pawl 204 is positioned within the first recess 228, the cabin door 115 will be held in place by the pawl 204 (e.g., preventing the latch hook 206 from moving), such that the door 115 does not open and/or move despite the door 115 not being latched (e.g., using a primary latch mechanism).

The second assembly position 325 of FIG. 3B illustrates the cabin door 115 in a closed position with the cabin door handle latched. In the example of the second assembly position 325, the door frame 302 includes an example linkage receiver 328 to retain the second linkage 308 with a relatively tight fit. The linkage receiver 328 has a tapered profile that tapers outwardly toward the second linkage 308. In the second assembly position 325, engagement of the cabin door 115 handle results in a counterclockwise downward movement of the primary latch actuation handle 208 (e.g., rotating about the second joint 212). The primary latch actuation handle 208 is configured to rotate counterclockwise about the second joint 212 until the second linkage 308 enters the linkage receiver 328. For example, rotation of the primary latch actuation handle 208 results in a downwards clockwise rotation of the reset link 202 about the first joint 210, the clockwise rotation of the first linkage 306 about the third joint 214, and the clockwise rotation of the first linkage 306 about the sixth joint 326 relative to the second linkage 308, as the second linkage 308 moves into position within the linkage receiver 328. As such, once the cabin door 115 is shut and the handle is latched, the second linkage 308 extends into the linkage receiver 328 while the reset link 202 moves with the handle, so that as the handle moves into a fully latched position, the pawl 204 is no longer engaged with the latch hook 206. However, the presence of the second linkage 308 within the linkage receiver 328 holds the door shut after latching (e.g., via the primary latching mechanism) is completed. During opening of the cabin door 115, the handle is unlatched, the second linkage 308 disengages from the linkage receiver 328, and the spring 310 pushes the pawl 204 into a fully-open position.

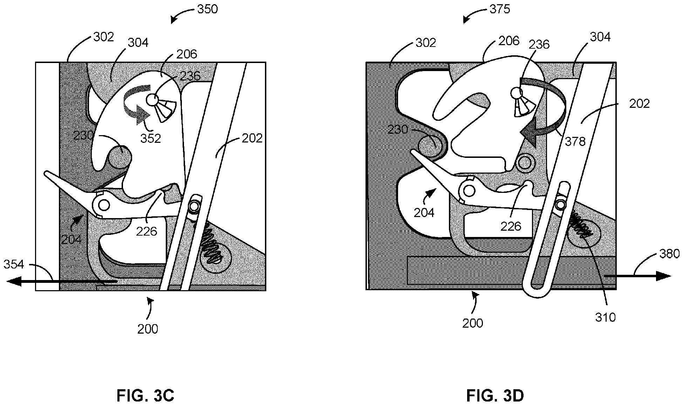

FIG. 3C illustrates an example third assembly position 350 including the self-closing and resetting latch assembly 200 of FIG. 2 positioned within an example aircraft door frame when the cabin door 115 is closed (e.g., the pin 230 is engaged by the latch hook 206). FIG. 3D illustrates an example fourth assembly position 375 including the self-closing and resetting latch assembly 200 of FIG. 2 positioned within an example aircraft door frame when the cabin door 115 is open (e.g., the pin 230 is disengaged from the latch hook 206). In the example of FIG. 3D, the spring 310 maintains the pawl 204 in a fully-open or a fully-closed position. The pawl 204 interfaces with the reset link 202, which is driven by the primary latch mechanism such that the pawl 204 disengages when the primary latch mechanism is engaged. As such, the closing and resetting latch assembly 200 is decoupled from primary door loads when the door is fully closed and self-resets to the open position as the door is opened. In the example of the third assembly position 350, the door is closed but not latched. The latch hook 206 engages the pin 230 while the pawl 204 engages the latch hook 206 using the protrusion 226, preventing the door from opening despite the door being unlatched. As the door is closed by a translation of the subframe 304 in an example first horizontal direction 354, the latch hook 206 translates in an example counterclockwise direction 352 about the fifth joint 236 to engage the pin 230. In the example of the fourth assembly position 375 of FIG. 3D, the latch hook 206 rotates in an example clockwise direction 378 about the fifth joint 236 to disengage from the pin 230. Similarly, the protrusion 226 of the pawl 204 disengages from the latch hook 206. As such, the subframe 304 is free to translate in an example second horizontal direction 380 to fully open the door 115.

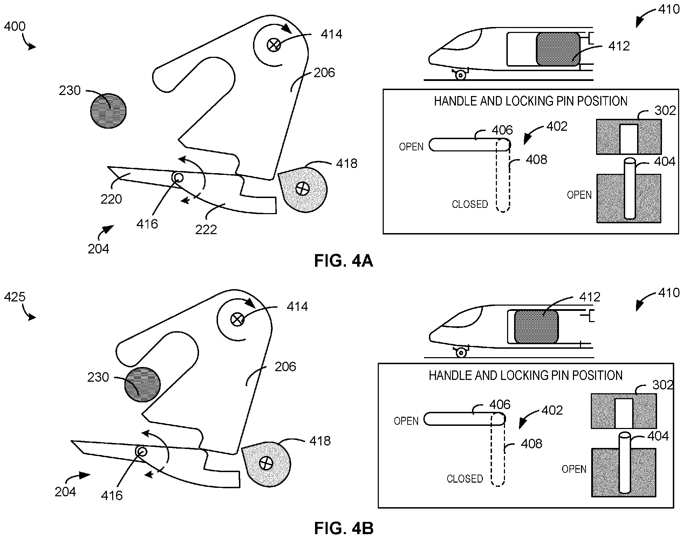

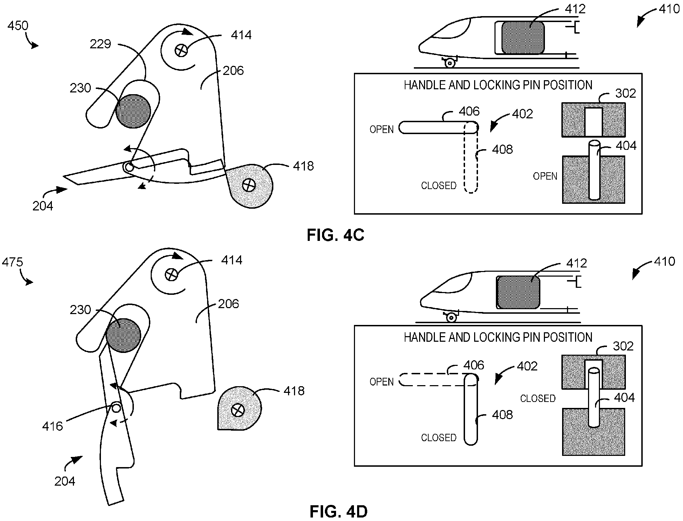

FIGS. 4A-D illustrate example movements 400, 425, 450, 475 of the latch hook 206 and pawl 204 of the self-closing and resetting latch 200 of FIG. 2 based on movement of an example latch handle 402 and corresponding position of an example locking pin 404. In the example of FIGS. 4A-4B, the locking pin 404 remains in an open position (e.g., locking pin 404 is not engaged within the door frame 302). For example, the latch handle 402 can be in an example open position 406 (e.g., locking pin 404 disengaged) or in an example closed position 408 (e.g., locking pin 404 engaged). In the example of FIGS. 4A-4D, an air vehicle (e.g., helicopter 410) is illustrated to track translation (e.g., opening or closing) of a cabin door 412 corresponding to the positioning of the latch hook 206 and pawl 204.

In the example of movement 400, the latch hook 206 includes a latch hook spring 414 and the pawl 204 includes an over-center pawl spring 416. In the example of FIGS. 4A-4B, the over-center pawl spring 416 connects the first portion 220 and the second portion 222 of the pawl 204. The pawl 204, the latch hook 206, and an example pawl reset lever 418 (e.g., coupled to latch handle 402) interact as the cabin door 412 translates horizontally during opening or closing of the cabin door 412. In the example of movement 400, the cabin door 412 is in a fully-opened position, resulting in the disengagement of the latch pin 230 from the latch hook 206. As the cabin door 412 begins to close as shown in connection with movement 425, the latch hook 206 rotates clockwise about the latch hook spring 414, thereby engaging the latch pin 230 as the self-closing and resetting latch 200 moves closer to the door frame 302.

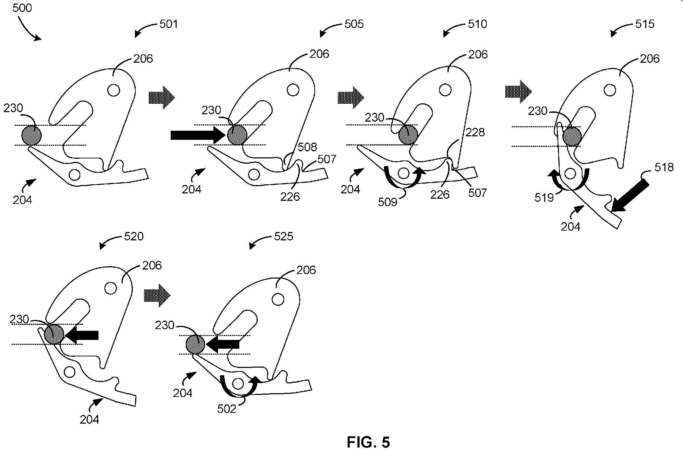

FIGS. 4C-4D illustrate example movements 450, 475 of the latch hook 206 and the pawl 204 of the self-closing and resetting latch 200 of FIG. 2 based on movement of the locking pin 404 into a closed position. For example, movement 450 indicates the positioning of the self-closing and resetting latch 200 when a hold-closed latch is engaged, but the locking pins (e.g., including locking pin 404) are not yet engaged. The latch pin 230 has entered the latch hook second recess 229, thereby securing the door (e.g., preventing the cabin door 412 from opening) despite the locking pins being disengaged. Once the locking pin(s) are engaged (e.g., as shown with the locking pin 404 in a closed position), the pawl reset lever 418 results in a full clockwise movement of the pawl 204 about the over-center pawl spring 416. As shown in further examples in connection with FIG. 5, operation of the self-closing and resetting latch 200 can be sequentially controlled to allow for a full range of motion as the cabin door opens and/or closes.

FIG. 5 illustrates an example sequence of movements 500 of the latch hook 206 and pawl 204 of the self-closing and resetting latch 200 of FIG. 2. The sequence of movements 500 shows the self-closing and resetting latch 200 transitions during (1) the closing of the cabin door 115 of FIG. 1 and/or the cabin door 412 of FIGS. 4A-4D, as shown in example latch movements 501, 505, 510, (2) the latching of the door (e.g., engagement of locking pin(s) 404 of FIGS. 4A-4D), as shown in example latch movement 515, and (3) the unlatching and opening of the door, as shown in example latch movements 520, 525. When the door 115 is fully open as shown in latch movement 501, the latch pin 230 is fully disengaged from the latch hook 206. As the door 115 begins to close, the self-closing and resetting latch 200 transitions horizontally towards the latch pin 230 and engages the latch pin 230 (e.g., latch pin 230 enters the latch hook recess 229 of FIG. 2), as shown in the latch movement sequence 505 and 510. Once the latch hook 206 rotates counterclockwise to engage the latch pin 230 as the door 115 is closed, an example edge 508 of the latch hook 206 lifts along the protrusion 226 of the pawl 204 and lands into a recess 507 formed by a curving edge of the protrusion 226, as shown in the movement sequence 505, 510, causing the pawl 204 to rotate in a counterclockwise direction 509 (e.g., allowing the protrusion 226 to fall into the first recess 228 of the latch hook 206).

When the door 115 is latched, the reset link 202 of FIG. 2 drives the second portion 222 of the pawl 204 in an example downward direction 518 (e.g., as shown in the latch movement 515), causing the pawl 204 to rotate in an example clockwise direction 519 (e.g., as shown in connection with the second assembly view 325 of FIG. 3B, where movement of the primary latch actuation handle 208 displaces the reset link 202). Movement sequence 520, 525 illustrates the retraction of the latch pin 230 from the latch hook 206 as the door 115 is unlatched and opened (e.g., moving the self-closing and resetting latch 200 away from the latch pin 230 as the subframe 304 translates horizontally). The pawl 204 rotates in an example counterclockwise direction 502 as the reset link 202 is displaced through the movement of the primary latch actuation handle 208. As a result of the movement sequence 525, the latch hook 206 and pawl 204 arrive to the same resting position as observed in the initial movement 501 prior to the closing of door 115. The positioning of the self-closing and resetting latch 200 components (e.g., pawl 204, latch hook 206, and/or the latch pin 230) allows for sufficient clearance to ensure smooth movement of the parts during door 115 closing and/or opening. Additionally, sufficient range of motion of the latch hook 206 allows for the latch hook 206 to be always unloaded when locking pins (e.g., locking pin 404) are engaged (e.g., fully closed).

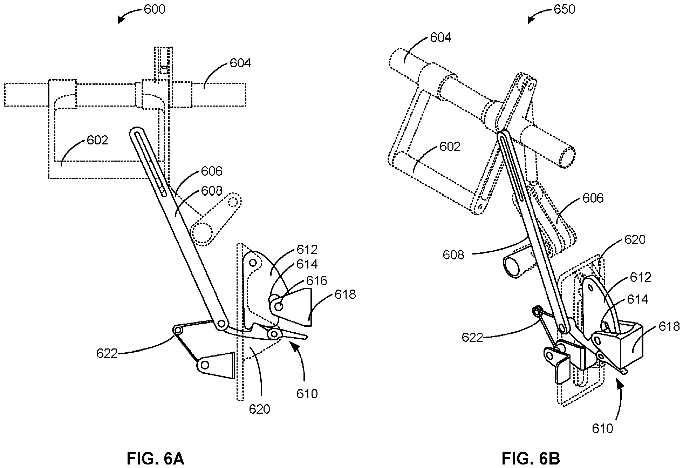

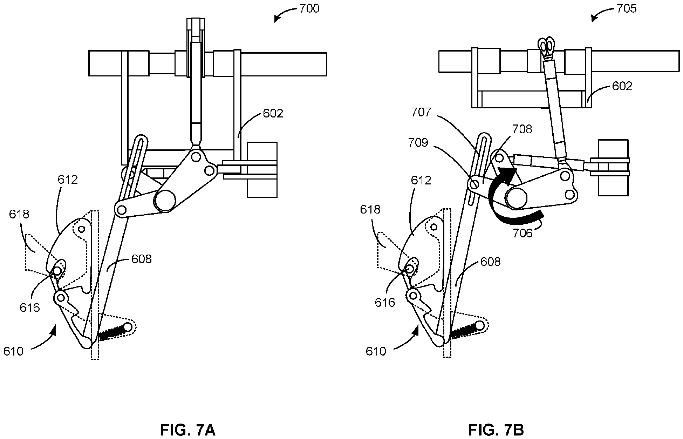

FIGS. 6A-6B illustrates example side views 600, 650 of a second example of a self-closing and resetting latch assembled in accordance with teachings of this disclosure. In the example of FIGS. 6A-6B, the self-closing and resetting latch is in connection with a main latch handle 602, a handle torque tube 604, and a linkage 606. An example reset link 608 is movably coupled to the main latch handle 602 and an example lock pawl 610. An example latch hook 612 includes an example receiver 614 to receive an example latch pin 616 positioned within an example latch pin fitting 618. In the example of FIGS. 6A-6B, the latch hook 612 and lock pawl 610 are housed in a latch hook and lock pawl housing 620. An example over-center spring 622 couples the latch hook and lock pawl housing 620 to the reset link 608. The self-closing and resetting latch mechanism of the second example self-closing and resetting latch illustrated using side views 600, 650 functions identically to the self-closing and resetting latch 200 of FIG. 2, and as shown in more detail in connection with FIGS. 7A-7L. For example, as the door 115 is closed, the latch hook 612 engages the latch pin 616 within the receiver 614 and the pawl 610 prevents the latch hook 612 from further movement, thereby locking the door in position prior to the door being latched using the main latch handle 602.

FIGS. 7A-7L illustrate example side views of a self-closing and resetting latch during an example sequence of movements associated with movement of an actuation handle (e.g., main latch handle 602). In the example of FIG. 7A, side view 700 shows the self-closing and resetting latch positioning when the primary latch is engaged and the hold-closed mechanism is disengaged. For example, the hold-closed mechanism is considered to be disengaged when the over-center spring 622 is not forcing the pawl 610 to engage the latch hook 612 to prevent the door from re-opening. Side view 705 of FIG. 7B shows the self-closing and resetting latch positioning when the primary latch is partially disengaged with the hold-closed mechanism also disengaged (e.g., main latch handle 602 disengages the primary latch mechanism). In the example of side view 705 of FIG. 7B, the main latch handle 602 rotation initiates a clockwise movement 706 of a linkage 708 that engages the reset link 608. In particular, the linkage 708 is movably coupled to the reset link 608 via an example connector 709 that translates gradually within an example slot 707 of the reset link 608 (e.g., analogous to the slot 216 of FIG. 2).

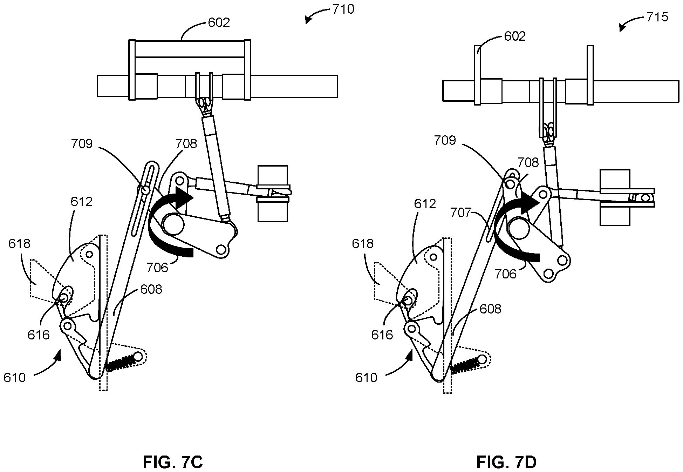

Side view 710 of FIG. 7C shows the same positioning (e.g., primary latch is partially disengaged with the hold-closed mechanism also disengaged), where the main latch handle 602 continues to rotate, causing further clockwise movement 706 of the linkage 708. Side view 715 of FIG. 7D shows the self-closing and resetting latch positioning when the primary latch is fully disengaged, and the hold-closed mechanism remains disengaged. In the example of side view 715, the connector 709 that translates gradually within the slot 707 of the reset link 608 has translated from the bottom of the slot 707 (e.g., as shown in side view 700) to the very top of the slot 707.

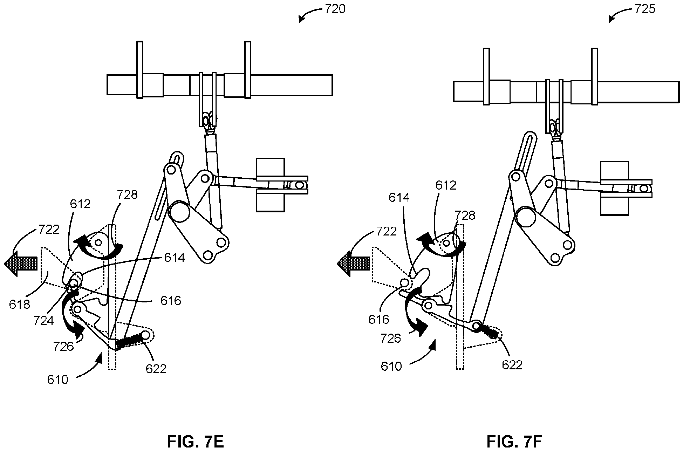

Side view 720 of FIG. 7E shows the self-closing and resetting latch positioning when the latches are disengaged and the door 115 begins to open. For example, as the door 115 translates to an open position, the hold-closed latch (e.g., latch hook 612 combined with latch pin 616) and pawl 610 are free to disengage. For example, as the door 115 opens, the latch pin fitting 618 remains stationary and/or translates in a direction 722 opposite of the self-closing and resetting latch assembly. As such, the latch pin 616 pushes on an example tip 724 of the pawl 610 (e.g., positioned behind the latch pin 616), causing the pawl 610 to rotate in an example counterclockwise direction 726. At the same time, the latch hook 612 begins to rotate in a clockwise direction 728 as the latch pin 616 begins to exit the receiver 614. Side view 725 of FIG. 7F shows the next step in the movement sequence when the over-center spring 622 forces the pawl 610 into an open-most position. For example, side view 725 shows that the door 115 has opened further (e.g., the latch pin 616 completely exists the receiver 614), while the over-center spring 622 has repositioned from a first position shown in side view 720 to a second position shown in side view 725.

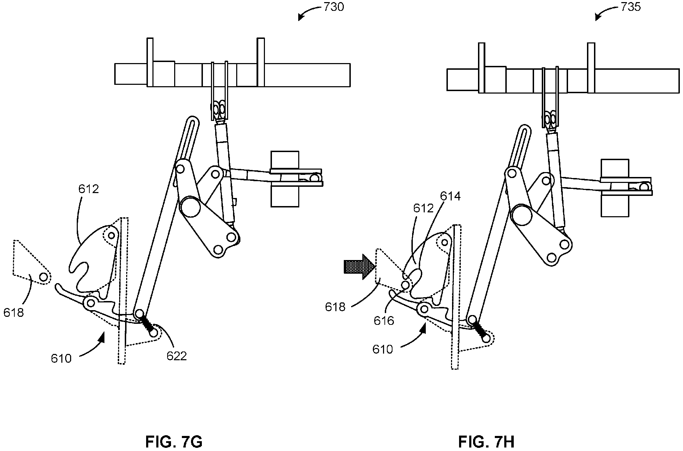

Side view 730 of FIG. 7G shows the self-closing and resetting latch positioning once the door 115 is fully open and the latches are disengaged. The over-center spring 622 maintains the pawl 610 in the open-most position. Side view 735 of FIG. 7H shows the self-closing and resetting latch positioning when the latches are still disengaged but the door 115 begins closing. As the latch hook 612 and the pawl 610 approach the latch pin fitting 618, the latch pin 616 begins to enter the receiver 614 of the latch hook 612.

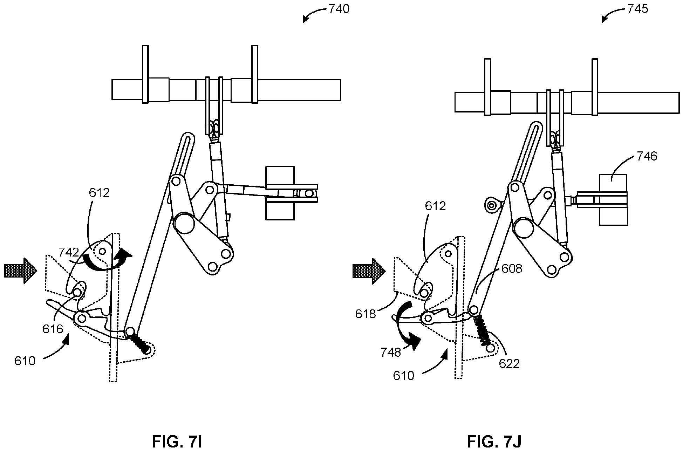

Side view 740 of FIG. 7I shows the self-closing and resetting latch positioning as the latch pin 616 enters the receiver 614, causing the latch hook 612 to rotate in an example counterclockwise direction 742 to fully receive the latch pin 616. Side view 745 of FIG. 7J shows the self-closing and resetting latch positioning as the hold-closed latch is engaged via an example linkage to the primary latch mechanism 746. Once the hold-closed latch is engaged, the over-center spring 622 forces the pawl 610 to engage the latch hook 612 to prevent the door from re-opening. In particular, the over-center spring 622 extends with movement of the reset link 608 in response to the engagement of the hold-closed latch, causing the pawl 610 to rotate in an example counterclockwise direction 748 and secure the latch hook 612 to prevent any movement of the latch hook 612 (e.g., analogous to the protrusion 226 entering the first recess 228 of the latch hook 206 of FIG. 2).

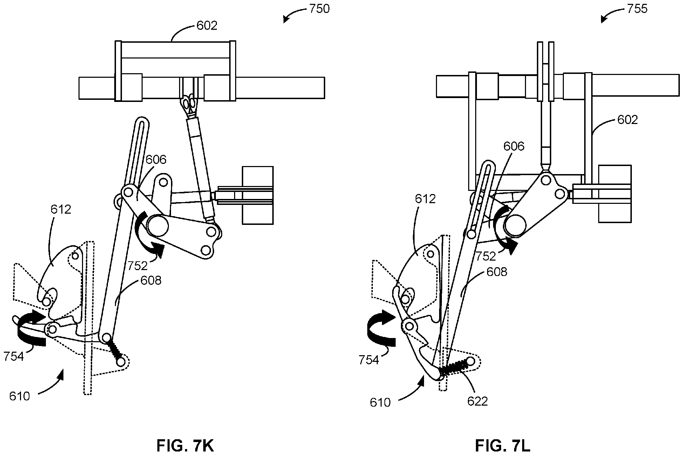

Side view 750 of FIG. 7K shows the self-closing and resetting latch positioning as the primary latch is engaging (e.g., via the main latch handle 602) and the hold-closed latch disengages. In particular, the reset link 608 moves the pawl 610 into an unlocked position as the linkage 606 rotates in an example counterclockwise direction 752, causing the pawl 610 to rotate in an example clockwise direction 754. As a result, the pawl 610 no longer secures the latch hook 612 in place (e.g., analogous to the protrusion 226 leaving the first recess 228 of the latch hook 206 of FIG. 2). Side view 755 of FIG. 7L shows the self-closing and resetting latch positioning when the primary latch is engaged and the hold-closed latch is disengaged. In response, the pawl 610 continues to move in the clockwise direction 754 as the linkage 606 rotates in the counterclockwise direction 752, causing the reset link 608 to force the transition of the pawl 610 into an unlocked position. At the same time, the over-center spring 622 forces the pawl 610 into a fully unlatched position. The hold-closed latch is fully disengaged as the primary latches are engaged, requiring no additional user tasks to ensure the cabin door 115 is locked in place.

From the foregoing, it will be appreciated that example methods and apparatus have been disclosed that permit the use of closing and resetting latches in a self-latching aircraft door. In examples disclosed herein, additional action from an operator (e.g., the flight attendant) is not necessary to close the door once the door has been shut by operating the handle which engages the primary latch mechanism (e.g., no additional steps to undo or relatch a second mechanism are needed). As such, in examples disclosed herein, a latch capable of latching and resetting without independent actuation can be used for securing aircraft doors. The disclosed mechanism of the self-closing and resetting latch described herein includes a configuration of the pawl, reset link, and main hook which allows the latch to self-engage as the door is closed and to reset as the door is opened. As such, the disclosed self-closing and resetting latch can be used in any application where a door latch is required and where it is beneficial to incorporate a hold-closed mechanism on the door.

Example assemblies for a self-closing and resetting latch are disclosed herein. Further examples and combinations thereof include the following:
Example 1 includes an apparatus, comprising a pawl having a protrusion, the pawl coupled to an over-center spring, the over-center spring connected to a frame of a cabin door, and a latch hook having a first recess to receive the protrusion of the pawl and a second recess to receive a latch pin when the cabin door closes.
Example 2 includes the apparatus of example 1, wherein the pawl is pivotally coupled to a reset link.
Example 3 includes the apparatus of example 2, wherein the reset link includes a slot to receive a connector that translates within the slot.
Example 4 includes the apparatus of example 3, wherein the connector is movably coupled to a main latch handle.
Example 5 includes the apparatus of examples 1 to 4, wherein the latch pin is positioned within a latch pin fitting, the latch pin fitting coupled to the door frame.
Example 6 includes the apparatus of examples 1 to 5, wherein the latch pin is to cause the latch hook to rotate when receiving the latch pin in the receiver.
Example 7 includes the apparatus of examples 1 to 6, wherein the over-center spring is to cause the pawl to transition into a fully unlatched position when a primary latch is engaged and a hold-closed latch is disengaged.
Example 8 includes an apparatus, comprising a pawl movably coupled to a reset link, the reset link to rotate about a joint of a primary latch actuation handle, the primary latch actuation handle to cause latching of a door, and a latch hook positioned to receive the pawl, the door stabilized against further movement when the pawl engages the latch hook.
Example 9 includes the apparatus of example 8, wherein the pawl includes a post, the post to transition within a slot of the reset link.
Example 10 includes the apparatus of example 9, wherein the post of the pawl is coupled to a spring.
Example 11 includes the apparatus of example 10, wherein the spring is to cause the pawl to fully unlatch when the primary latch actuation handle is engaged.
Example 12 includes the apparatus of examples 8 to 11, wherein the latch hook is to engage a latch pin when the door is closed.
Example 13 includes the apparatus of example 12, wherein the latch hook includes a first recess to receive the pawl.
Example 14 includes the apparatus of example 13, wherein the latch hook includes a second recess to receive the latch pin.
Example 15 includes an apparatus, comprising means for engaging a latch pin, the means for engaging the latch pin having means for receiving the latch pin, and means for locking the means for engaging the latch pin, the means for locking having means for connecting to a means for resetting, the means for resetting pivotally coupled to a means for actuating a primary latch.
Example 16 includes the apparatus of example 15, wherein the means for engaging the latch pin is configured to rotate relative to the latch pin for the latch pin to translate into the means for receiving the latch pin.
Example 17 includes the apparatus of example 15 or 16, wherein the means for locking the means for engaging the latch pin is configured to rotate relative to the means for resetting.
Example 18 includes the apparatus of examples 15 to 17, wherein the means for engaging the latch pin includes means for receiving the means for locking when a hold-closed latch is engaged.
Example 19 includes the apparatus of example 18, wherein the means for locking is coupled to an over-center spring, the over-center spring to force the means for locking to translate into the means for receiving the means for locking.
Example 20 includes the apparatus of examples 15 to 19, wherein the latch pin is to cause the means for locking to disengage from the means for engaging the latch pin when the means for engaging the latch pin translates in a direction opposite from the latch pin.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

The following claims are hereby incorporated into this Detailed Description by this reference, with each claim standing on its own as a separate embodiment of the present disclosure.

## Claims

1. An apparatus, comprising:
a pawl (204, 610) having a protrusion (226), the pawl (204, 610) coupled to an over-center spring (310, 622), the over-center spring (310, 622) connected to a frame of a cabin door (115, 412); and
a latch hook (206, 612) having a first recess (228) to receive the protrusion (226) of the pawl (204) and a second recess (229) to receive a latch pin (230, 616) when the cabin door (115, 412) closes.

2. The apparatus of claim 1, wherein the pawl (204, 610) is pivotally coupled to a reset link (202, 608).

3. The apparatus of claim 2, wherein the reset link (202, 608) includes a slot (216, 707) to receive a connector (709) that translates within the slot (216, 707).

4. The apparatus of claim 3, wherein the connector (709) is movably coupled to a main latch handle (602).

5. The apparatus of any preceding claim, wherein the latch pin (616) is positioned within a latch pin fitting (618), the latch pin fitting (618) coupled to the door (115, 412) frame.

6. The apparatus of any preceding claim, wherein the latch pin (616) is arranged to cause the latch hook (206) to rotate when receiving the latch pin (616) in the receiver (614).

7. The apparatus of any preceding claim, wherein the over-center spring (310, 622) is arranged to cause the pawl (204, 610) to transition into a fully unlatched position when a primary latch is engaged and a hold-closed latch is disengaged.

8. The apparatus of any preceding claim wherein the second recess includes a first edge surface (232) and a second edge surface (234) arranged to receive the latch pin (230).

9. The apparatus of any of claims 6 to 8 wherein the depth of the second recess (229) of the latch hook (206) is arranged to determine the amount of latch hook rotation.

10. The apparatus of any preceding claim wherein when the protrusion of the pawl is positioned within the first recess, the cabin door is held in place by the pawl such that the door does not open.
